# EUROPEAN PATENT SPECIFICATION

(11) **EP 3 865 244 B1**
(45) Date of publication and mention of the grant of the patent: **22.02.2023**
(21) Application number: 19871995.7
(22) Date of filing: 04.10.2019
(51) Int. Cl.: B23K 26/046, B23K 26/06, B23K 26/082, B23K 26/08, B23K 26/38, B23K 37/02, B23K 37/04, B23K 101/18

(54) **LASER PROCESSING MACHINE AND LASER PROCESSING METHOD**
LASERBEARBEITUNGSMASCHINE UND LASERBEARBEITUNGSVERFAHREN
MACHINE DE TRAITEMENT AU LASER ET PROCÉDÉ DE TRAITEMENT AU LASER

(30) Priority: 12.10.2018 JP 2018193150
(43) Date of publication of application: 18.08.2021
(73) Proprietor: Amada Co., Ltd., Isehara-shi, Kanagawa 259-1196 (JP)
(72) Inventor: SUGIYAMA, Akihiko, Isehara-shi, Kanagawa 259-1196 (JP)
(74) Representative: Grünecker Patent- und Rechtsanwälte PartG mbB
(86) International application number: PCT/JP2019/039237
(87) International publication number: WO 2020/075632

(56) References cited:
- WO-A1-2015/156119
- WO-A1-2015/156119
- WO-A1-2018/167712
- JP-A- H07 236 987
- JP-A- 2001 030 089
- JP-A- 2010 036 240
- JP-A- 2016 047 547
- JP-A- 2017 524 558

## Description

### Technical Field

The present disclosure relates to a laser machining apparatus and a laser machining method that machine sheet metal by a laser beam, see claims 1 and 4.

### Background Art

Laser machining apparatuses that cut sheet metal by laser beams emitted from laser oscillators, and produce products having predetermined shapes are widely used. Non-Patent Literature 1 describes cutting sheet metal while vibrating a laser beam in a predetermined vibration pattern. WO 2015/156119 A1 (basis for the preamble of claims 1 and 4) discloses a laser processing apparatus wherein laser light oscillates with respect to a workpiece in a specific cycle while the processing head body is being relatively moved.

WO 2018/167712 A1 discloses a handheld pulsed laser device for cleaning or treating a surface.

JP 2016-047547 A discloses a laser processing apparatus for performing laser processing on a workpiece such as a semiconductor wafer

### Citation List

### Non-Patent Literature

Non-Patent Literature 1: JANUARY 2017 The FABRICATOR 67, Shaping the beam for the best cut

### Summary

The invention is defined by the claims.

When sheet metal is cut by a laser machining apparatus, a focal point of the laser beam is located in a predetermined position in a direction orthogonal to a surface of the sheet metal. Specifically, the laser machining apparatus may cut sheet metal by locating the focal point of the laser beam precisely on a top surface of the sheet metal. The laser machining apparatus may cut the sheet metal by locating the focal point of the laser beam upward from the top surface of the sheet metal by a predetermined distance. The laser machining apparatus may cut the sheet metal by locating the focal point of the laser beam within a thickness of the sheet metal downward from the top surface of the sheet metal by a predetermined distance.

In this way, the laser machining apparatus cuts sheet metal by properly setting a relative position of the focal point of the laser beam with respect to the sheet metal. One or more embodiments has or have an object to provide a laser machining apparatus and a laser machining method that can favorably cut sheet metal even when a focal point of a laser beam is moved in a direction orthogonal to a surface of the sheet metal at the time of cutting the sheet metal while vibrating the laser beam in a predetermined vibration pattern.

According to a first aspect of the present invention, a laser machining apparatus is defined in claim 1, which includes a machining head configured to emit a laser beam, a focusing lens configured to focus the laser beam to irradiate a sheet metal with the laser beam so as to form a beam spot on a surface of the sheet metal, a moving mechanism configured to relatively move the machining head with respect to the sheet metal, along the surface of the sheet metal, a beam vibration mechanism configured to vibrate the laser beam when the sheet metal is cut by the irradiation of the sheet metal with the laser beam while the machining head is relatively moved by the moving mechanism, a focal point moving mechanism configured to move a focal point of the laser beam with which the sheet metal is irradiated, in an orthogonal direction orthogonal to the surface of the sheet metal, a focal position control section configured to control the focal point moving mechanism to locate the focal point in a predetermined position in the orthogonal direction, and a beam vibration mechanism control section configured to control the beam vibration mechanism to change an amplitude with which the laser beam is vibrated according to a position of the focal point in the orthogonal direction, when the focal position control section controls the focal point moving mechanism to change the position of the focal point in the orthogonal direction.

According to a second aspect of the present invention, a laser machining method is defined in claim 4, which includes irradiating a surface of sheet metal with a laser beam focused by a focusing lens, relatively moving an irradiation position of the laser beam with respect to the surface of the sheet metal to cut the sheet metal, vibrating the laser beam in a predetermined vibration pattern when the sheet metal is cut, and changing an amplitude with which the laser beam is vibrated in the vibration pattern according to a position of a focal point in an orthogonal direction, when the focal point of the laser beam is moved in the orthogonal direction orthogonal to the surface of the sheet metal.

According to the laser machining apparatus and the laser machining method of one or more embodiments, it is possible to favorably cut the sheet metal even when the focal point of the laser beam is moved in the direction orthogonal to the surface of the sheet metal at the time of cutting the sheet metal while vibrating the laser beam in the predetermined vibration pattern.

### Brief Description of Drawings

[Figure 1] Figure 1 is a diagram illustrating an entire configuration example of a laser machining apparatus.
[Figure 2] Figure 2 is a perspective view illustrating detailed configuration examples of a collimator unit and a machining head in the laser machining apparatus.
[Figure 3] Figure 3 is a diagram for explaining a displacement of an irradiation position of a laser beam to sheet metal by a beam vibrating mechanism.
[Figure 4] Figure 4 is a diagram illustrating a parallel vibration pattern of the laser beam.
[Figure 5] Figure 5 is a diagram illustrating an orthogonal vibration pattern of a laser beam.
[Figure 6] Figure 6 is a diagram illustrating an actual vibration pattern at a time of using the orthogonal vibration pattern illustrated in Figure 5.
[Figure 7] Figure 7 is a partial block diagram illustrating a detailed configuration example of a laser machining apparatus of one or more embodiments.
[Figure 8] Figure 8 is a diagram conceptually illustrating beam profile data retained by the laser machining apparatus of one or more embodiments.
[Figure 9] Figure 9 is a diagram illustrating a comparison of amplitudes of laser beams in a vibration pattern in a state where focal points of the laser beams are moved from a reference position in a conventional art and according to the present invention
[Figure 10] Figure 10 is a table illustrating a comparison of cutting results of sheet metal at a time of the focal points of the laser beams being moved from the reference position in the conventional art and one or more embodiments.

### Description of Embodiment

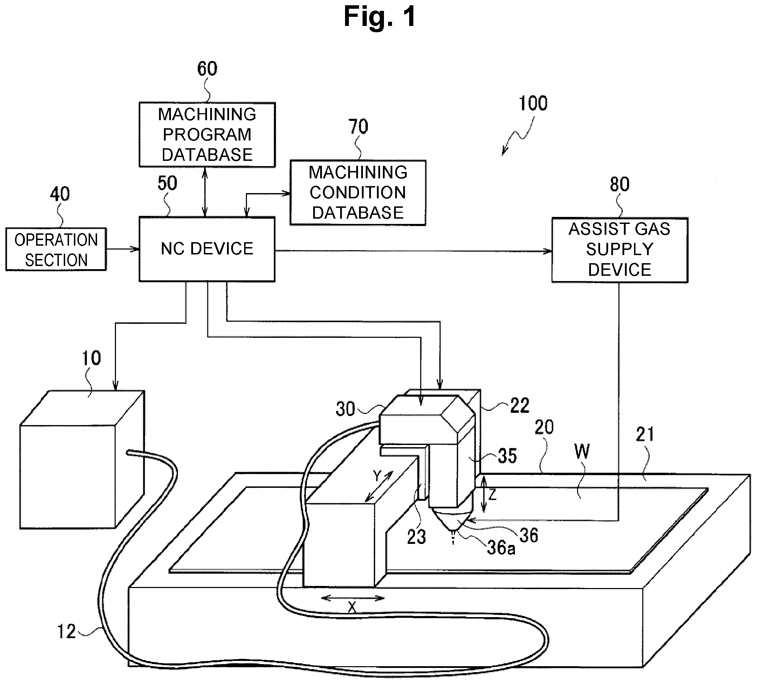

Hereinafter, a laser machining apparatus and a laser machining method of one or more embodiments will be described with reference to the accompanying drawings. In Figure 1, a laser machining apparatus 100 includes a laser oscillator 10 that generates and emits a laser beam, a laser machining unit 20, a process fiber 12 that transmits the laser beam emitted by the laser oscillator 10 to the laser machining unit 20.

Further, the laser machining apparatus 100 includes an operation section 40, a NC device 50, a machining program database 60, a machining condition database 70, and an assist gas supply device 80. The NC device 50 is an example of a control device that controls respective parts of the laser machining apparatus 100.

As the laser oscillator 10, a laser oscillator that amplifies an excitation beam emitted from a laser diode to emit a laser beam of a predetermined wavelength, or a laser oscillator that directly uses a laser beam emitted by a laser diode is preferable. The laser oscillator 10 is, for example, a solid laser oscillator, a fiber laser oscillator, a disk laser oscillator, or a direct diode laser oscillator (DDL oscillator).

The laser oscillator 10 emits a laser beam in a band of 1 µm with a wavelength of 900 nm to 1100 nm. Taking a fiber laser oscillator and a DDL oscillator as examples, the fiber laser oscillator emits a laser beam with a wavelength of 1060 nm to 1080 nm, and the DDL oscillator emits a laser beam with a wavelength of 910 mm to 950 nm.

The laser machining unit 20 has a machining table 21 where sheet metal W to be machined is placed, a gate-type X-axis carriage 22, a Y-axis carriage 23, a collimator unit 30 fixed to the Y-axis carriage 23, and a machining head 35. The X-axis carriage 22 is configured to be movable in an X-axis direction on the machining table 21. The Y-axis carriage 23 is configured to be movable in a Y-axis direction perpendicular to the X-axis on the X-axis carriage 22. The X-axis carriage 22 and the Y-axis carriage 23 function as a moving mechanism that moves the machining head 35 in the X-axis direction, the Y-axis direction, or an arbitrary composition direction of an X-axis and a Y-axis, along a surface of the sheet metal W.

Instead of moving the machining head 35 along the surface of the sheet metal W, a position of the machining head 35 may be fixed, and the sheet metal W may be configured to move. The laser machining apparatus 100 can include the moving mechanism that moves the machining head 35 relatively to the surface of the sheet metal W.

To the machining head 35, a nozzle 36 that has a circular opening 36a at a tip end portion, and emits a laser beam from the opening 36a is attached. The sheet metal W is irradiated with the laser beam emitted from the opening 36a of the nozzle 36. The assist gas supply device 80 supplies nitrogen, oxygen, mixed gas of nitrogen and oxygen, or air to the machining head 35 as assist gas. At a time of machining the sheet metal W, the assist gas is blown to the sheet metal W from the opening 36a. The assist gas discharges molten metal in a kerf width where the sheet metal W is melted.

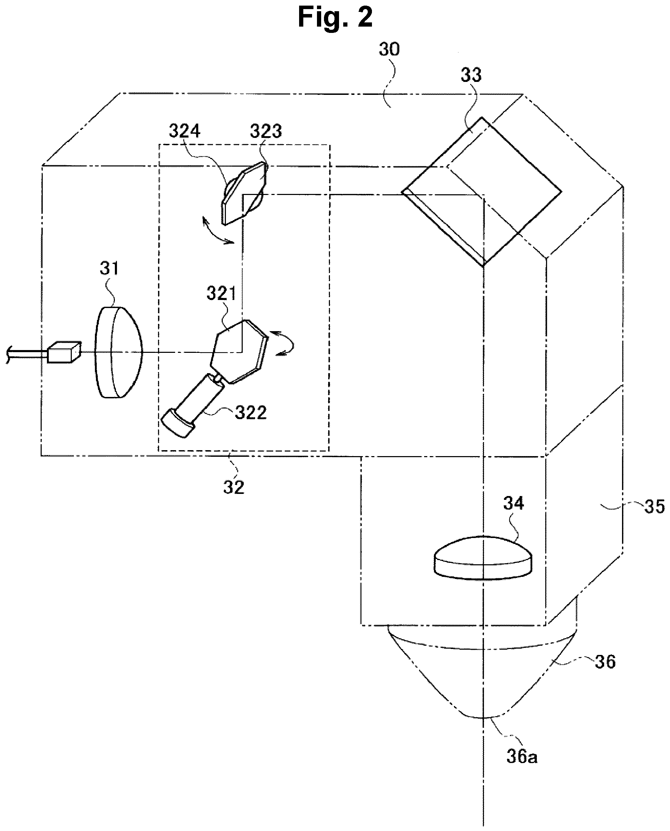

As illustrated in Figure 2, the collimator unit 30 includes a collimation lens 31 that converts a divergent laser beam emitted from the process fiber 12 into a parallel laser beam (collimated laser beam). Further, the collimator unit 30 includes a galvano scanner unit 32, and a bend mirror 33 that reflects a laser beam emitted from the galvano scanner unit 32 toward a lower part in a Z-axis direction perpendicular to the X-axis and the Y-axis. The machining head 35 includes a focusing lens 34 that focuses the laser beam reflected by the bend mirror 33, and irradiates the sheet metal W.

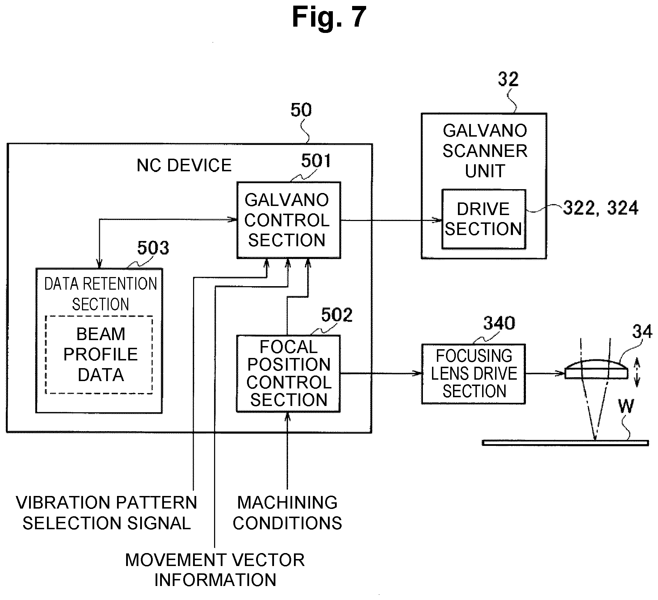

Though not illustrated here, in order to adjust a focal position of the laser beam, the focusing lens 34 is configured to be movable in a direction to approach the sheet metal W and a direction to separate from the sheet metal W by a focusing lens drive section 340 (see Figure 7) .

The laser machining apparatus 100 is centered so that the laser beam emitted from the opening 36a of the nozzle 36 is located at a center of the opening 36a. In a regular state, the laser beam is emitted from the center of the opening 36a. The galvano scanner unit 32 functions as a beam vibrating mechanism that vibrates the laser beam that advances in the machining head 35 and is emitted from the opening 36a, in the opening 36a. How the galvano scanner unit 32 vibrates the laser beam will be described later.

The galvano scanner unit 32 has a scanning mirror 321 that reflects the laser beam emitted from the collimation lens 31, and a drive section 322 that rotates the scanning mirror 321 to a predetermined angle. Further, the galvano scanner unit 32 has a scanning mirror 323 that reflects the laser beam emitted from the scanning mirror 321, and a drive section 324 that rotates the scanning mirror 323 to a predetermined angle.

The drive sections 322 and 324 can reciprocally vibrate the scanning mirrors 321 and 323 within a predetermined angle range respectively based on control by the NC device 50. By reciprocally vibrating either one or both of the scanning mirror 321 and scanning mirror 323, the galvano scanner unit 32 vibrates the laser beam with which the sheet metal W is irradiated.

The galvano scanner unit 32 is one example of the beam vibrating mechanism, and the beam vibrating mechanism is not limited to the galvano scanner unit 32 having a pair of scanning mirrors.

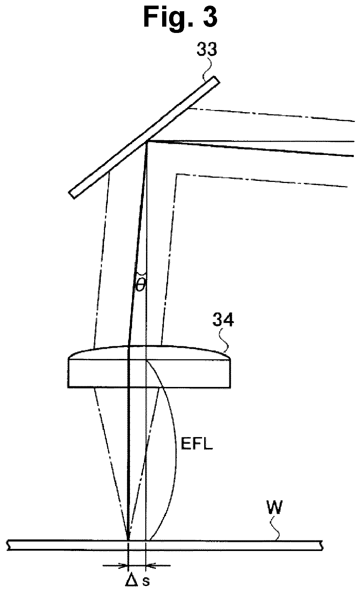

Figure 3 illustrates a state where either one or both of the scanning mirror 321 and the scanning mirror 323 is or are tilted, and a position of the laser beam with which the sheet metal W is irradiated is displaced. In Figure 3, a fine solid line that is bent by the bend mirror 33 and passes through the focusing lens 34 shows an optical axis of the laser beam at the time of the regular state of the laser machining apparatus 100.

Note that, in detail, an angle of the optical axis of the laser beam that is incident on the bend mirror 33 changes by an operation of the galvano scanner unit 32 located in front of the bend mirror 33, and the optical axis deviates from a center of the bend mirror 33. In Figure 3, for simplification, incident positions of the laser beams onto the bend mirror 33 are assumed to be same positions before and after the operation of the galvano scanner unit 32.

The optical axis of the laser beam is assumed to be displaced from the position shown by the fine solid line to a position shown by a thick solid line by the action by the galvano scanner unit 32. When the laser beam reflected by the bend mirror 33 is assumed to incline at an angle θ, an irradiation position of the laser beam on the sheet metal W is displaced by a distance Δs. When a focal length of the focusing lens 34 is EFL (Effective Focal Length), the distance Δs is calculated by EFL × sinθ.

If the galvano scanner unit 32 inclines the laser beam at the angle θ in an opposite direction to a direction shown in Figure 3, the irradiation position of the laser beam on the sheet metal W can be displaced by the distance Δs in an opposite direction to the direction shown in Figure 3. The distance Δs is a distance less than a radius of the opening 36a, and is preferably a distance less than or equal to a maximum distance when the maximum distance is a distance obtained by subtracting a predetermined margin from the radius of the opening 36a.

The NC device 50 can vibrate the laser beam in a predetermined direction within a plane of the sheet metal W by controlling the drive sections 322 and 324 of the galvano scanner unit 32. By vibrating the laser beam, it is possible to vibrate a beam spot formed on a surface of the sheet metal W.

The laser machining apparatus 100 configured as above cuts the sheet metal W by the laser beam emitted from the laser oscillator 10 and produces a product having a predetermined shape. The laser machining apparatus 100 locates the focal point of the laser beam at any appropriate position of, on the top surface of the sheet metal W, upward from the top surface by a predetermined distance, or downward from the top surface by a predetermined distance within a thickness of the sheet metal W, and cuts the sheet metal while vibrating the laser beam in a predetermined vibration pattern.

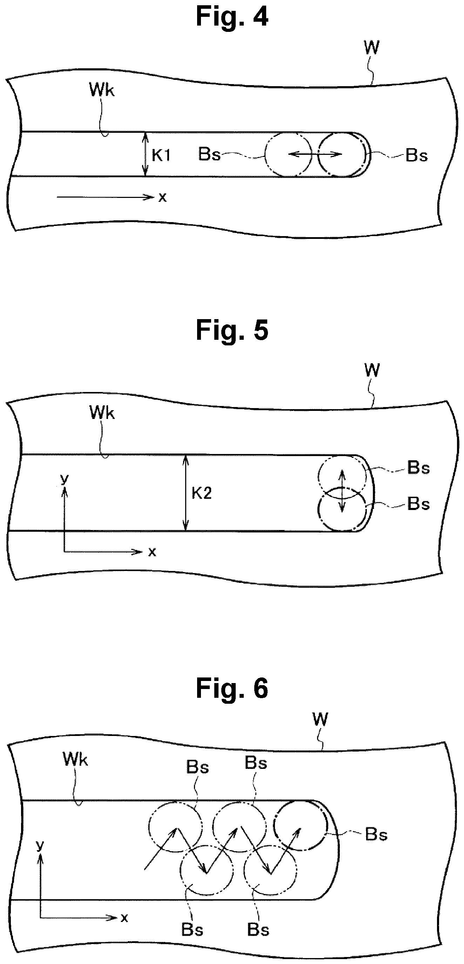

By using Figure 4 and Figure 5, an example of the vibration pattern in which the NC device 50 vibrates the laser beam by the galvano scanner unit 32 will be described. A cutting advancing direction of the sheet metal W is set as an x-direction, and a direction orthogonal to the x-direction within the plane of the sheet metal W is set as a y-direction. The NC device 50 can select any of vibration patterns in accordance with an instruction of the operator by the operation section 40. When the vibration pattern is set to the machining conditions stored in the machining condition database 70, the NC device 50 selects the vibration pattern that is set in the machining conditions.

Figure 4 and Figure 5 illustrate vibration patterns in a state where the machining head 35 is not moved in the x-direction to make it easier to understand the vibration pattern. Figure 4 is a vibration pattern in which a beam spot Bs is vibrated in the x-direction within a groove Wk formed by advancement of the beam spot Bs. The vibration pattern illustrated in Figure 4 is referred to as a parallel vibration pattern. When a frequency at which the beam spot Bs is vibrated in the parallel direction with the cutting advancing direction is Fx, and a frequency at which the beam spot Bs is vibrated in a direction orthogonal to the cutting advancing direction is Fy, the parallel vibration pattern is a vibration pattern in which Fx:Fy is 1:0.

Figure 5 is a vibration pattern in which the beam spot Bs is vibrated in the y-direction. By vibrating the beam spot Bs in the y-direction, the groove Wk has a kerf width K2 that is wider than a kerf width K1. The vibration pattern illustrated in Figure 5 is referred to as an orthogonal vibration pattern. The orthogonal vibration pattern is a vibration pattern in which Fx : Fy is 0 : 1.

The NC device 50 may vibrate the laser beam in a vibration pattern in which the vibration in the x-direction and the vibration in the y-direction are combined. A first example of another vibration pattern is a circular vibration pattern in which the laser beam is vibrated circularly so that the beam spot Bs draws a circle. A second example of another vibration pattern is an 8-shaped vibration pattern in which the laser beam is vibrated in an 8-shape so that the beam spot Bs draws the figure eight. A third example of another vibration pattern is a C-shaped vibration pattern in which the laser beam is vibrated so that the beam spot Bs draws the letter C in the alphabet.

In reality, the laser beam vibrates while the machining head 35 is moving in the cutting advancing direction, and therefore the vibration pattern becomes a vibration pattern in which a displacement in the cutting advancing direction (x-direction) is added to the vibration pattern illustrated in Figure 4 or Figure 5, or another vibration pattern not illustrated. When the orthogonal vibration pattern illustrated in Figure 5 is taken as an example, the beam spot Bs vibrates in the y-direction while moving in the x-direction, and therefore the actual orthogonal vibration pattern becomes a vibration pattern as illustrated in Figure 6.

Next, a specific configuration will be described, which is for favorably cutting the sheet metal W even when the focal point of the laser beam is moved in the direction orthogonal to the surface of the sheet metal W, when the laser machining apparatus 100 cuts the sheet metal W while vibrating the laser beam in the predetermined vibration pattern.

As illustrated in Figure 7, the NC device 50 includes a galvano control section 501, a focal position control section 502, and a data retention section 503. The galvano control section 501 is supplied with movement vector information indicating in which direction of the combination of the X-direction and the Y-direction the machining head is to be moved, and a vibration pattern selection signal. Based on the movement vector information, the x-direction that is the cutting advancing direction of the sheet metal W, and the y-direction orthogonal to the x-direction are determined.

The galvano control section 501 controls either one or both of the drive sections 322 and 324 of the galvano scanner unit 32 so as to vibrate the laser beam in the vibration pattern selected by the vibration pattern selection signal. The galvano control section 501 is one example of a beam vibration mechanism control section that controls a beam vibration mechanism.

The focal position control section 502 controls the focusing lens drive section 340 so that the focal position set in the machining conditions is achieved. The focusing lens drive section 340 is one example of a focal point moving mechanism that moves the focal point of the laser beam with which the sheet metal W is irradiated in the orthogonal direction with respect to the surface of the sheet metal W. The focal position of the laser beam may be configured to be adjusted by a method other than moving the focusing lens 34.

When the focal position control section 502 controls the focusing lens drive section 340 to move the focal point, the focal position control section 502 supplies the focal point movement information indicating in which direction of upward or downward the focal point is moved to what extent to the galvano control section 501. As described later, the galvano control section 501 controls the drive sections 322 and 324 based on the focal point movement information.

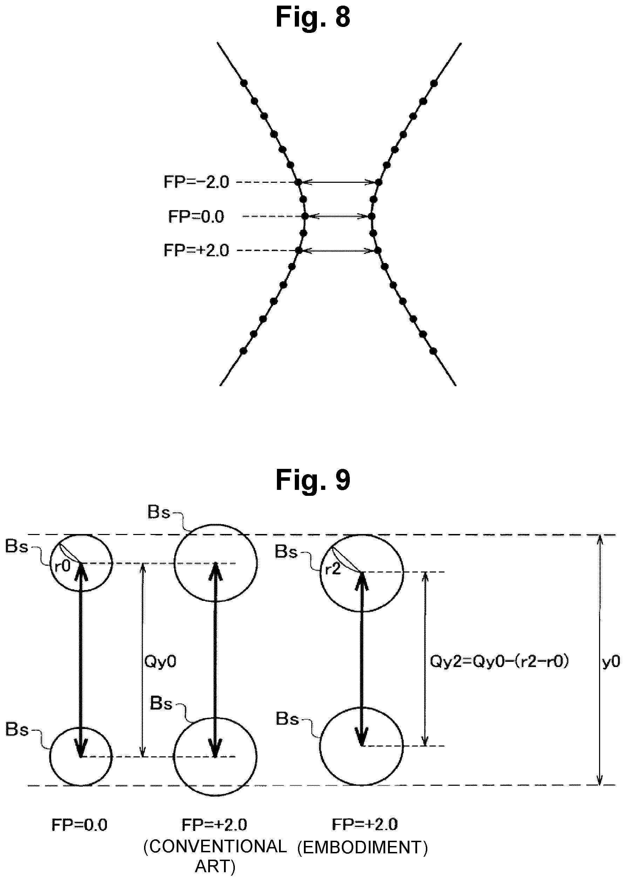

The data retention section 503 retains beam profile data. Figure 8 conceptually illustrates the beam profile data. The beam profile data shows beam diameters in respective positions in the advancing direction of the laser beam when the laser beam of a convergent beam is most focused on a beam waist, and thereafter diverges. The data retention section 503 can retain the beam diameter at intervals of 1 mm, for example, in the advancing direction of the laser beam as the beam profile data.

Assume that FP = 0.0 is a so-called state of just focus where a beam waist that is the focal point of the laser beam is located precisely on the top surface of the sheet metal W. Assume that a beam diameter in the beam waist is 120 µm. When the focal point is moved upward of the sheet metal W, for example, by a distance of 2.0 mm, the top surface of the sheet metal W is irradiated with a beam spot Bs having a beam diameter at a position of FP = +2.0. The beam diameter at this time is, for example, 148 µm. Likewise, when the focal point is moved downward of the sheet metal W, for example, by a distance of 2.0 mm, the top surface of the sheet metal W is irradiated with a beam spot Bs having a beam diameter at a position of FP = -2.0. The beam diameter at this time is also 148 µm.

The distance in which the galvano control section 501 controls the drive sections 322 and 324 to vibrate the beam spot Bs as in Figure 4 or Figure 5 is set on the premise of the state of just focus where the top surface of the sheet metal W is irradiated with the beam diameter at the position of FP = 0.0.

As illustrated in Figure 9, when the orthogonal vibration pattern illustrated in Figure 5 is taken as an example, it is assumed that an amplitude in the y-direction is set at a reference amplitude Qy0 when the laser beam is in the state of just focus where FP = 0.0. In Figure 9, for ease of understanding, the reference amplitude Qy0 is illustrated with more exaggeration than in Figure 5. Further, a beam diameter at the time of FP = 0.0, and a beam diameter at the time of FP = +2.0 are illustrated with a more exaggerated ratio than an actual size ratio.

When the focal position control section 502 controls the focusing lens drive section 340 to establish FP = +2.0, the beam diameter is 148 µm. In the conventional art, the amplitude with which the laser beam is vibrated is the reference amplitude Qy0 regardless of which position in the orthogonal direction to the surface of the sheet metal W the focal point of the laser beam is located. Accordingly, an irradiation range in the y-direction of the laser beam onto the sheet metal W becomes wider than an irradiation range y0 in the y-direction at the time of FP = 0.0.

In one or more embodiments, the galvano control section 501 refers to the beam profile data, and controls the drive section 322 or 324 to make the amplitude in the y-direction of the laser beam Qy2 to maintain the irradiation range y0 in the y-direction, based on the focal point movement information supplied from the focal position control section 502.

When the beam diameter in FP = 0.0 is generalized as r0, and the beam diameter in FP = +2.0 is generalized as r2, the galvano control section 501 can determine the amplitude Qy2 by calculation formula Qy2 = Qy0 - (r2 - r0) .

In other words, based on the beam profile data, the beam diameter of the beam spot Bs on the surface of the sheet metal W at the time of the focal point of the laser beam being located on the reference position is assumed to be a first beam diameter, whereas a beam diameter of the beam spot Bs on the surface of the sheet metal W at a time of the focal point being located on a predetermined position other than the reference position is assumed to be a second beam diameter. It is preferable to set the reference position as FP = 0.0. When the focal point of the laser beam is located on a predetermined position other than the reference position, the galvano control section 501 can control the galvano scanner unit 32 to vibrate the laser beam with an amplitude obtained by subtracting a difference value which is obtained by subtracting the first beam diameter from the second beam diameter, from the reference amplitude Qy0.

In Figure 9, the orthogonal vibration pattern illustrated in Figure 5 is taken as an example, but even in the parallel vibration pattern illustrated in Figure 4 or other vibration patterns, the galvano control section 501 similarly changes the amplitude according to a relative position of the focal point with respect to the sheet metal W.

As above, and according to the present invention, even when the focal point of the laser beam is moved, the amplitude of each of the vibration patterns is changed, and therefore the irradiation range of the laser beam at the time of the beam spot Bs being located at both end portions in the vibration direction is made constant. The irradiation range of the laser beam is a distance between both outer sides at the time of the beam spot Bs being located at both the end portions in the vibration direction. According to one or more embodiments, the irradiation range which is set in advance can be maintained, and therefore even if the focal point of the laser beam is moved, the sheet metal W can be favorably cut.

In particular, when the kerf width of the groove Wk formed at the time of cutting the sheet metal W as in the orthogonal vibration pattern is set, it is not preferable that the kerf width is changed by moving the focal point of the laser beam. According to one or more embodiments, it is possible to cut the sheet metal W without changing the kerf width.

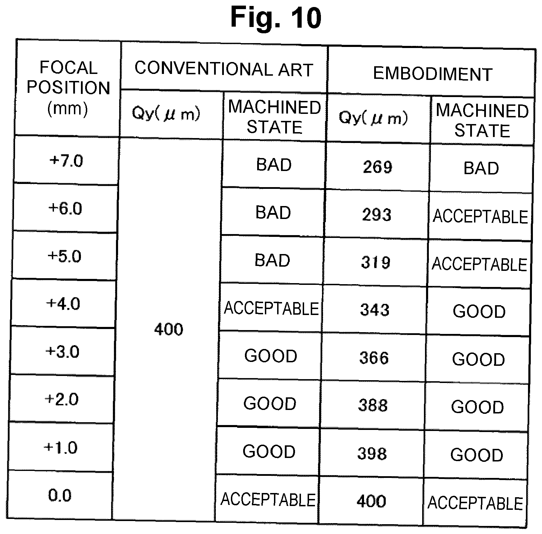

According to one or more embodiments, there is also provided an effect of being able to enlarge the range in which the sheet metal W can be cut when the focal point is moved in the orthogonal direction of the surface of the sheet metal W. Figure 10 illustrates experimental results at a time of cutting soft steel of a thickness of 12 mm as the sheet metal W by making focal positions different by 1.0 mm with FP = 0.0 to +7.0 by using the orthogonal vibration pattern.

As illustrated in Figure 10, in the conventional art, the amplitude Qy is constant at 400 µm regardless of the position of the focal point in the orthogonal direction. In Figure 10, "good" indicates a case where the sheet metal W can be cut with good quality of a cut surface, "acceptable" indicates a case where the sheet metal W can be cut though the quality of the cut surface is not so good, and "bad" indicates a case where the sheet metal W cannot be cut. In the case of the conventional art where the amplitude Qy is made constant at 400 µm, results of acceptable, good, good, good, acceptable, bad, bad, and bad were respectively obtained in FP = 0.0 to +7.0.

In one or more embodiments, the amplitude Qy in FP = 0.0 is set at 400 µm of the reference amplitude QyO, and the amplitudes Qy are set at 398, 388, 366, 343, 319, 293, and 269 µm respectively in FP = +1.0 to +7.0. In FP = 0.0 to +7.0, results of acceptable, good, good, good, good, acceptable, acceptable and bad were respectively obtained. In this way, according to one of more embodiments, it is possible to enlarge the range in which the sheet metal W can be cut. Further, according to one or more embodiments, it is possible to enlarge the range in which the sheet metal W can be favorably cut.

In Figure 10, the experimental results using the soft steel as the sheet metal W are illustrated, but it is possible to obtain a similar effect even when the sheet metal W is a stainless steel or an aluminum alloy since it does not deviate from the purport of maintaining the irradiation range of a laser beam.

The present invention is not limited to the one or more embodiments described above, and can be variously changed within the range without departing from the scope of the present invention as defined in the appended claims.

## Claims

1. A laser machining apparatus (100), comprising:
a machining head (35) configured to emit a laser beam;
a focusing lens (34) configured to focus the laser beam to irradiate a sheet metal (W) with the laser beam so as to form a beam spot (Bs) on a surface of the sheet metal (W);
a moving mechanism (22, 23) configured to relatively move the machining head (35) with respect to the sheet metal (W), along the surface of the sheet metal (W);
a beam vibration mechanism (32) configured to vibrate the laser beam when the sheet metal (W) is cut by the irradiation of the sheet metal (W) with the laser beam while the machining head (35) is relatively moved by the moving mechanism (22, 23);
**characterised in that** the laser machining apparatus further comprises:
a focal point moving mechanism (340) configured to move a focal point of the laser beam with which the sheet metal (W) is irradiated, in an orthogonal direction orthogonal to the surface of the sheet metal (W); and
a focal position control section (502) configured to control the focal point moving mechanism (340) to locate the focal point in a predetermined position in the orthogonal direction;
a beam vibration mechanism control section (501) configured to control the beam vibration mechanism (32) to change an amplitude with which the laser beam is vibrated so that an irradiation range of the laser beam that is a distance between both outer sides of the beam spot in a vibration direction when the beam spot is located at both end portions in the vibration direction is constant, according to a position of the focal point in the orthogonal direction, when the focal position control section (502) controls the focal point moving mechanism (340) to change the position of the focal point in the orthogonal direction.

2. The laser machining apparatus (100) according to claim 1, further comprising:
a data retention section (503) configured to retain beam profile data showing a beam diameter corresponding to a position in an advancing direction of the laser beam,
wherein the beam vibration mechanism control section (501) refers to the beam profile data, and determines an amplitude with which the laser beam is vibrated.

3. The laser machining apparatus (100) according to claim 2,
wherein an amplitude with which the beam vibration mechanism (32) vibrates the laser beam when the focal point is located in a reference position in the orthogonal direction is set as a reference amplitude (Qy0), and
assuming that a beam diameter of a beam spot (Bs) on a surface of the sheet metal (W) at a time of the focal point being located in the reference position is a first beam diameter, and a beam diameter of a beam spot (Bs) on the surface of the sheet metal (W) at a time of the focal point being located in a predetermined position other than the reference position is a second beam diameter, based on the beam profile data, the beam vibration mechanism control section (501) controls the beam vibration mechanism (32) to vibrate the laser beam with an amplitude obtained by subtracting a difference value from the reference amplitude (Qy0) when the focal point of the laser beam is located in a predetermined position other than the reference position, the difference value being obtained by subtracting the first beam diameter from the second beam diameter.

4. A laser machining method, comprising:
irradiating a surface of sheet metal (W) with a laser beam focused by a focusing lens (34);
relatively moving an irradiation position of the laser beam with respect to the surface of the sheet metal (W) to cut the sheet metal (W); and
vibrating the laser beam in a predetermined vibration pattern when the sheet metal (W) is cut,
**characterized in that** the laser machining method further comprises
changing an amplitude with which the laser beam is vibrated in the vibration pattern so that an irradiation range of the laser beam that is a distance between both outer sides of a beam spot in a vibration direction when the beam spot is located at both end portions in the vibration direction is constant, according to a position of the focal point in an orthogonal direction, when the focal point of the laser beam is moved in the orthogonal direction orthogonal to the surface of the sheet metal (W).

5. The laser machining method according to claim 4, comprising
determining the amplitude with which the laser beam is vibrated, by referring to beam profile data stored in a data retention section (503) and showing a beam diameter according to a position in an advancing direction of the laser beam.

6. The laser machining method according to claim 5,
wherein an amplitude of the vibration pattern at a time of the focal point being located in a reference position in the orthogonal direction is set as a reference amplitude (Qy0), and
assuming that a beam diameter of a beam spot (Bs) on the surface of the sheet metal (W) at a time of the focal point being located in the reference position is a first beam diameter, and a beam diameter of a beam spot (Bs) on the surface of the sheet metal (W) at a time of the focal point being located in a predetermined position other than the reference position is a second beam diameter, based on the beam profile data, the laser beam is vibrated with an amplitude obtained by subtracting a difference value from the reference amplitude (Qy0) when the focal point is located in a predetermined position other than the reference position, the difference value being obtained by subtracting the first beam diameter from the second beam diameter.

## Patentansprüche

1. Laserbearbeitungsvorrichtung (100), die Folgendes umfasst:
einen Bearbeitungskopf (35), der so konfiguriert ist, dass er einen Laserstrahl emittiert;
eine Fokussierungslinse (34), die so konfiguriert ist, dass sie den Laserstrahl fokussiert, um ein Blech (W) mit dem Laserstrahl zu bestrahlen, um einen Strahlfleck (Bs) auf einer Oberfläche des Blechs (W) zu bilden;
einen Bewegungsmechanismus (22, 23), der so konfiguriert ist, dass er den Bearbeitungskopf (35) in Bezug auf das Blech (W) entlang der Oberfläche des Blechs (W) relativ bewegt;
einen Strahlvibrationsmechanismus (32), der so konfiguriert ist, dass er den Laserstrahl in Schwingung versetzt, wenn das Blech (W) durch die Bestrahlung des Blechs (W) mit dem Laserstrahl geschnitten wird, während der Bearbeitungskopf (35) durch den Bewegungsmechanismus (22, 23) relativ bewegt wird;
**dadurch gekennzeichnet, dass** die Laserbearbeitungsvorrichtung (100) ferner umfasst
einen Mechanismus (340) zur Bewegung des Brennpunkts, der so konfiguriert ist, dass er einen Brennpunkt des Laserstrahls, mit dem das Blech (W) bestrahlt wird, in einer orthogonalen Richtung orthogonal zur Oberfläche des Blechs (W) bewegt; und
einen Brennpunktpositions-Steuerabschnitt (502), der so konfiguriert ist, dass er den Brennpunkt-Bewegungsmechanismus (340) steuert, um den Brennpunkt in einer vorbestimmten Position in der orthogonalen Richtung zu positionieren,
einen Strahlvibrationsmechanismus-Steuerabschnitt (501), der so konfiguriert ist, dass er den Strahlvibrationsmechanismus (32) steuert, um eine Amplitude zu ändern, mit der der Laserstrahl vibriert wird, so dass ein Bestrahlungsbereich des Laserstrahls, der ein Abstand zwischen beiden Außenseiten des Strahlflecks in einer Vibrationsrichtung ist, wenn der Strahlfleck an beiden Endabschnitten in der Vibrationsrichtung angeordnet ist, konstant ist, gemäß einer Position des Brennpunkts in der orthogonalen Richtung, wenn der Brennpunktpositions-Steuerabschnitt (502) den Brennpunkt-Bewegungsmechanismus (340) steuert, um die Position des Brennpunkts in der orthogonalen Richtung zu ändern.

2. Laserbearbeitungsvorrichtung (100) nach Anspruch 1, die ferner umfasst
einen Datenspeicherabschnitt (503), der so konfiguriert ist, dass er Strahlprofildaten speichert, die einen Strahldurchmesser zeigen, der einer Position in einer Vorschubrichtung des Laserstrahls entspricht,
wobei der Abschnitt (501) zur Steuerung des Strahlvibrationsmechanismus auf die Strahlprofildaten Bezug nimmt und eine Amplitude bestimmt, mit der der Laserstrahl vibriert wird.

3. Laserbearbeitungsvorrichtung (100) nach Anspruch 2,
wobei eine Amplitude, mit der der Strahlvibrationsmechanismus (32) den Laserstrahl in Schwingung versetzt, wenn sich der Brennpunkt in einer Referenzposition in der orthogonalen Richtung befindet, als eine Referenzamplitude (Qy0) festgelegt wird, und
Annehmen, dass ein Strahldurchmesser eines Strahlflecks (Bs) auf einer Oberfläche des Blechs (W) zu einem Zeitpunkt, zu dem sich der Brennpunkt in der Referenzposition befindet, ein erster Strahldurchmesser ist, und ein Strahldurchmesser eines Strahlflecks (Bs) auf der Oberfläche des Blechs (W) zu einem Zeitpunkt, zu dem sich der Brennpunkt in einer vorbestimmten Position befindet, die von der Referenzposition verschieden ist, ein zweiter Strahldurchmesser ist, basierend auf den Strahlprofildaten, der Strahlvibrationsmechanismus-Steuerabschnitt (501) den Strahlvibrationsmechanismus (32) steuert, um den Laserstrahl mit einer Amplitude in Schwingung zu versetzen, die durch Subtraktion eines Differenzwertes von der Referenzamplitude (Qy0) erhalten wird, wenn sich der Brennpunkt des Laserstrahls in einer vorbestimmten Position befindet, die von der Referenzposition verschieden ist, wobei der Differenzwert durch Subtraktion des ersten Strahldurchmessers von dem zweiten Strahldurchmesser erhalten wird.

4. Verfahren zur Laserbearbeitung, umfassend:
Bestrahlung einer Blechoberfläche (W) mit einem durch eine Fokussierlinse (34) fokussierten Laserstrahl;
relatives Bewegen einer Bestrahlungsposition des Laserstrahls in Bezug auf die Oberfläche des Blechs (W) zum Schneiden des Blechs (W); und
Vibrieren des Laserstrahls in einem vorbestimmten Vibrationsmuster, wenn das Blech (W) geschnitten wird,
**dadurch gekennzeichnet, dass** das Laserbearbeitungsverfahren ferner umfasst
Ändern einer Amplitude, mit der der Laserstrahl in dem Vibrationsmuster vibriert wird, so dass ein Bestrahlungsbereich des Laserstrahls, der ein Abstand zwischen beiden Außenseiten eines Strahlflecks in einer Vibrationsrichtung ist, wenn der Strahlfleck an beiden Endabschnitten in der Vibrationsrichtung angeordnet ist, konstant ist, gemäß einer Position des Brennpunkts in einer orthogonalen Richtung, wenn der Brennpunkt des Laserstrahls in der orthogonalen Richtung orthogonal zur Oberfläche des Blechs (W) bewegt wird.

5. Verfahren zur Laserbearbeitung nach Anspruch 4, umfassend
Bestimmen der Amplitude, mit der der Laserstrahl in Schwingung versetzt wird, unter Bezugnahme auf Strahlprofildaten, die in einem Datenspeicherabschnitt (503) gespeichert sind und einen Strahldurchmesser entsprechend einer Position in einer Vorschubrichtung des Laserstrahls anzeigen.

6. Verfahren zur Laserbearbeitung nach Anspruch 5,
wobei eine Amplitude des Schwingungsmusters zu einem Zeitpunkt, zu dem sich der Brennpunkt in einer Referenzposition in der orthogonalen Richtung befindet, als eine Referenzamplitude (Qy0) festgelegt wird, und
Annehmen, dass ein Strahldurchmesser eines Strahlflecks (Bs) auf der Oberfläche des Blechs (W) zu einem Zeitpunkt, zu dem sich der Brennpunkt in der Referenzposition befindet, ein erster Strahldurchmesser ist, und ein Strahldurchmesser eines Strahlflecks (Bs) auf der Oberfläche des Blechs (W) zu einem Zeitpunkt, zu dem sich der Brennpunkt in einer vorbestimmten Position befindet, die sich von der Referenzposition unterscheidet, ein zweiter Strahldurchmesser ist, der Laserstrahl auf der Grundlage der Strahlprofildaten mit einer Amplitude in Schwingung versetzt wird, die durch Subtraktion eines Differenzwertes von der Referenzamplitude (Qy0) erhalten wird, wenn sich der Brennpunkt in einer vorbestimmten Position befindet, die sich von der Referenzposition unterscheidet, wobei der Differenzwert durch Subtraktion des ersten Strahldurchmessers von dem zweiten Strahldurchmesser erhalten wird.

## Revendications

1. Dispositif d'usinage au laser (100), comprenant :
une tête d'usinage (35) configurée pour émettre un faisceau laser ;
une lentille de focalisation (34) configurée pour focaliser le faisceau laser pour irradier une feuille de métal (W) avec le faisceau laser de sorte à constituer un point de faisceau (Bs) sur une surface de la feuille de métal (W) ;
un mécanisme de déplacement (22, 23) configuré pour déplacer relativement la tête d'usinage (35) par rapport à la feuille de métal (W), le long de la surface de la feuille de métal (W) ;
un mécanisme de vibration de faisceau (32) configuré pour faire vibrer le faisceau laser lorsque la feuille de métal (W) est coupée par l'irradiation de la feuille de métal (W) avec le faisceau laser tandis que la tête d'usinage (35) est déplacée relativement par le mécanisme de déplacement (22, 23) ;
**caractérisé en ce que** le dispositif d'usinage au laser comprend en outre :
un mécanisme de déplacement de point focal (340) configuré pour déplacer un point focal du faisceau laser avec lequel la feuille de métal (W) est irradiée, dans une direction orthogonale orthogonale à la surface de la feuille de métal (W) ; et
une section de contrôle de position focale (502) configurée pour contrôler le mécanisme de déplacement de point focal (340) pour localiser le point focal sur une position prédéterminée dans la direction orthogonale ;
une section de contrôle de mécanisme de vibration de faisceau (501) configurée pour contrôler le mécanisme de vibration de faisceau (32) pour changer une amplitude avec laquelle le faisceau laser vibre de sorte qu'une plage d'irradiation du faisceau laser qui est une distance entre les deux côtés extérieurs du point de faisceau dans une direction de vibration lorsque le point de faisceau est situé sur les deux parties d'extrémité dans la direction de vibration soit constante, selon une position du point focal dans la direction orthogonale, lorsque la section de contrôle de position focale (502) contrôle le mécanisme de déplacement de point focal (340) pour changer la position du point focal dans la direction orthogonale.

2. Le dispositif d'usinage au laser (100) selon la revendication 1, comprenant en outre :
une section de conservation de données (503) configurée pour conserver des données de profil de faisceau présentant un diamètre de faisceau correspondant à une position dans une direction d'avancement du faisceau laser,
dans lequel la section de contrôle de mécanisme de vibration de faisceau (501) fait référence aux données de profil de faisceau, et détermine une amplitude avec laquelle le faisceau laser vibre.

3. Le dispositif d'usinage au laser (100) selon la revendication 2,
dans lequel une amplitude avec laquelle le mécanisme de vibration de faisceau (32) fait vibrer le faisceau laser lorsque le point focal est situé sur une position de référence dans la direction orthogonale est définie en tant qu'amplitude de référence (Qy0), et
en considérant qu'un diamètre de faisceau d'un point de faisceau (Bs) sur une surface de la feuille de métal (W) à un moment où le point focal est situé sur la position de référence est un premier diamètre de faisceau, et un diamètre de faisceau du point de faisceau (Bs) sur la surface de la feuille de métal (W) à un moment où le point focal est situé sur une position prédéterminée autre que la position de référence est un deuxième diamètre de faisceau, selon les données de profil de faisceau, la section de contrôle de mécanisme de vibration de faisceau (501) contrôle le mécanisme de vibration de faisceau (32) pour faire vibrer le faisceau laser avec une amplitude obtenue en soustrayant une valeur de différence de l'amplitude de référence (Qy0) lorsque le point focal du faisceau laser est situé sur une position prédéterminée autre que la position de référence, la valeur de différence étant obtenue en soustrayant le premier diamètre de faisceau du deuxième diamètre de faisceau.

4. Procédé d'usinage au laser, comprenant :
une irradiation d'une surface de feuille de métal (W) avec un faisceau laser focalisé par une lentille de focalisation (34) ;
un déplacement relatif d'une position d'irradiation du faisceau laser par rapport à la surface de la feuille de métal (W) pour couper la feuille de métal (W) ; et
une vibration du faisceau laser selon un schéma de vibration prédéterminé lorsque la feuille de métal (W) est coupée,
**caractérisé en ce que** le procédé d'usinage au laser comprend en outre
un changement d'une amplitude avec laquelle le faisceau laser vibre dans le schéma de vibration de sorte qu'une plage d'irradiation du faisceau laser qui est une distance entre les deux côtés extérieurs d'un point de faisceau dans une direction de vibration lorsque le point de faisceau est situé sur les deux parties d'extrémité dans la direction de vibration soit constante, selon une position du point focal dans une direction orthogonale, lorsque le point focal du faisceau laser est déplacé dans la direction orthogonale orthogonale à la surface de la feuille de métal (W).

5. Le procédé d'usinage au laser selon la revendication 4, comprenant
une détermination de l'amplitude avec laquelle le faisceau laser vibre, en se référant à des données de profil de faisceau stockées dans une section de conservation de données (503) et présentant un diamètre de faisceau selon une position dans une direction d'avancement du faisceau laser.

6. Le procédé d'usinage au laser selon la revendication 5,
dans lequel une amplitude du schéma de vibration à un moment où le point focal est situé sur une position de référence dans la direction orthogonale est définie en tant qu'amplitude de référence (Qy0), et
en considérant qu'un diamètre de faisceau d'un point de faisceau (Bs) sur la surface de la feuille de métal (W) à un moment où le point focal est situé sur la position de référence est un premier diamètre de faisceau, et un diamètre de faisceau du point de faisceau (Bs) sur la surface de la feuille de métal (W) à un moment où le point focal est situé sur une position prédéterminée autre que la position de référence est un deuxième diamètre de faisceau, selon les données de profil de faisceau, le faisceau laser vibre avec une amplitude obtenue en soustrayant une valeur de différence de l'amplitude de référence (Qy0) lorsque le point focal du faisceau laser est situé sur une position prédéterminée autre que la position de référence, la valeur de différence étant obtenue en soustrayant le premier diamètre de faisceau du deuxième diamètre de faisceau.
